# FASCICULE DE BREVET EUROPEEN

(11) **EP 3 963 183 B1**
(45) Date de publication et mention de la délivrance du brevet: **25.02.2026**
(21) Numéro de dépôt: 20719443.2
(22) Date de dépôt: 21.04.2020
(51) Int. Cl.: F01D 5/28, B05D 7/00, C23C 24/08

(54) **PROCEDE DE REVETEMENT D'UNE PIECE DE TURBOMACHINE D'AERONEF**
VERFAHREN ZUR BESCHICHTUNG EINER KOMPONENTE EINES TURBINEN-STRAHLTRIEBWERKS
METHOD OF COATING A COMPONENT OF AN AIRCRAFT TURBOMACHINE

(30) Priorité: 02.05.2019 FR 1904630
(43) Date de publication de la demande: 09.03.2022
(73) Titulaire: SAFRAN AIRCRAFT ENGINES, 75015 Paris (FR)
(72) Inventeur: CHARLAS, Mathieu, Julien, 77550 MOISSY-CRAMAYEL (FR)
(74) Mandataire: Cabinet Beau de Loménie
(86) Numéro de dépôt international: PCT/EP2020/061080
(87) Numéro de publication internationale: WO 2020/221624

(56) Documents cités:
- EP-A1- 1 352 934
- EP-A1- 2 907 975
- EP-A1- 3 219 925
- EP-A2- 2 060 328
- FR-A1- 2 979 660
- US-A1- 2006 281 861
- US-A1- 2018 044 771

## Description

### Domaine Technique

La présente invention concerne un procédé de revêtement d'une pièce de turbomachine d'aéronef par un revêtement anti-érosion en utilisant une technique de poudrage à chaud.

### Technique antérieure

Certaines pièces de moteur d'aéronef comme les aubes de soufflante peuvent subir une forte érosion en fonctionnement. Cette érosion est généralement due aux impacts avec les particules portées par le flux d'air aspiré par le moteur. Il est souhaitable de disposer d'un procédé de revêtement d'une pièce de turbomachine par un revêtement anti-érosion qui soit relativement simple à mettre en œuvre.

US 2018/044771 divulgue une aube de turbine comprenant un revêtement anti-érosion et une extrémité abrasive réalisée par projection thermique et par ablation laser. Le document US2006/281861A1 concerne l'application d'un revêtement anti-givrage et anti-érosion en polymère par exemple sur des composants de moteur à turbine à gaz.

### Exposé de l'invention

La présente invention concerne un procédé de revêtement d'une pièce de turbomachine d'aéronef par un revêtement anti-érosion, le procédé comprenant :
- le dépôt du revêtement anti-érosion par poudrage à chaud sur une pièce de turbomachine d'aéronef en matériau composite à matrice organique ou en matériau métallique, ledit revêtement anti-érosion comprenant un polymère polyuréthane ou silicone, ledit polymère ayant une température de transition vitreuse inférieure ou égale à -30°C.

La température de transition vitreuse, notée « Tg » dans la suite, peut être déterminée par calorimétrie différentielle à balayage (« Differential Scanning Calorimetry » ; « DSC »).

Sauf mention contraire, le « revêtement anti-érosion » sera désigné dans la suite par « revêtement ». L'expression « polymère polyuréthane ou silicone » sera désignée par « polymère ». L'expression « matériau composite à matrice organique » sera, quant à elle, désignée par « matériau CMO ».

L'invention met en œuvre la technique de poudrage à chaud pour former un revêtement anti-érosion polymérique. Cela permet de disposer d'un procédé particulièrement simple et automatisable. On évite en particulier de réaliser un collage pour fixer un film anti-érosion ainsi que l'emploi d'une peinture anti-érosion. Ces techniques conduisent en effet à un rallongement du cycle de production et peuvent être relativement complexes à maîtriser. Le choix d'un polymère ayant une Tg faible tel que décrit plus haut permet de garantir un caractère élastique pour le revêtement même lorsque le moteur est utilisé dans un environnement à très faible température, et donc de réduire l'endommagement lors des impacts avec des particules.

Dans un exemple de réalisation, ledit polymère a une température de transition vitreuse inférieure ou égale à -55°C.

Une telle caractéristique permet avantageusement de réduire davantage encore l'endommagement du revêtement lors des impacts avec des particules.

Dans un exemple de réalisation, le revêtement anti-érosion comprend en outre des particules céramiques et/ou carbone.

La présence de telles particules permet avantageusement d'améliorer davantage encore la résistance à l'érosion conférée par le revêtement.

Dans un exemple de réalisation, le revêtement anti-érosion comprend en outre un agent de coloration.

L'agent de coloration constitue avantageusement un témoin d'alerte lorsque l'endommagement du revêtement anti-érosion atteint un stade trop avancé et qu'il est nécessaire de procéder à une réparation ou à un remplacement de ce dernier.

Dans un exemple de réalisation, le revêtement anti-érosion a une épaisseur comprise entre 100 µm et 400 µm.

L'épaisseur du revêtement peut être mesurée par ultrason dans le cas d'une pièce en matériau CMO ou par courant de Foucault dans le cas d'une pièce en matériau métallique.

Ces valeurs d'épaisseur optimisent le compromis entre protection contre l'érosion et adhérence du revêtement. Le fait de limiter l'épaisseur du revêtement permet aussi de limiter la perturbation aérodynamique engendrée par ce revêtement.

Dans un exemple de réalisation, la pièce est en matériau composite à matrice organique et la pièce est maintenue à une température inférieure ou égale à 120°C durant le poudrage à chaud.

Le fait de limiter la température durant le poudrage à chaud permet avantageusement de limiter tout risque d'altération de la matrice organique de la pièce. En outre, cette caractéristique est particulièrement avantageuse dans le cas particulier d'une aube de soufflante sur laquelle un bord d'attaque a été rapporté par collage afin de ne pas affecter ce collage.

Dans un exemple de réalisation, la pièce de turbomachine est une pièce de soufflante d'un moteur d'aéronef. Par exemple, la pièce est une aube de soufflante. La pièce peut encore être une aube de redresseur de soufflante ou un panneau d'isolation acoustique.

### Brève description des dessins

[Fig. 1] La figure 1 illustre, de manière schématique, le dépôt d'un revêtement par poudrage à chaud sur une aube de soufflante selon un exemple de mise en œuvre de l'invention.
[Fig. 2] La figure 2 illustre une aube de soufflante utilisable dans le cadre de l'invention.
[Fig. 3] La figure 3 illustre l'aube de soufflante revêtue par le revêtement anti-érosion suite au poudrage à chaud.

### Description des modes de réalisation

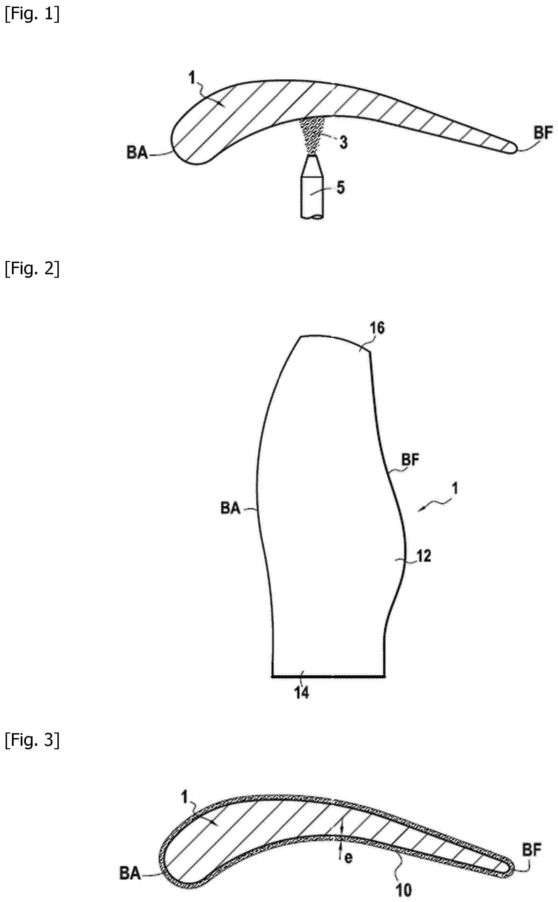

La pièce 1 est dans l'exemple illustré une aube de soufflante. Celle-ci est montrée en section transversale par rapport à sa hauteur à la figure 1. Une vue de l'aube de soufflante sur toute sa hauteur est fournie à la figure 2. L'aube de soufflante 1 comprend un aubage 12 qui s'étend entre une portion de pied 14 et une portion de sommet 16. L'aube 1 présente un bord d'attaque BA et un bord de fuite BF. Comme précédemment évoqué, l'invention n'est pas limitée au revêtement d'une aube de soufflante. Plus généralement, la pièce peut être une pièce de la soufflante de la turbomachine. La pièce peut être destinée à être positionnée dans un flux d'air secondaire contournant la chambre de combustion de la turbomachine. La pièce de turbomachine peut être une pièce de partie froide de turbomachine, c'est-à-dire destinée à être soumise en fonctionnement à une température inférieure ou égale à 300°C, par exemple inférieure ou égale à 150°C.

La pièce peut être en matériau CMO. Dans ce cas, elle comporte un renfort fibreux densifié par une matrice organique, par exemple par une matrice époxyde. Le renfort fibreux peut par exemple être obtenu par tissage, par exemple par tissage tridimensionnel. On peut en variante former le renfort fibreux par drapage de strates fibreuses. Le renfort fibreux peut comporter des fibres de carbone, des fibres de verre ou un mélange de telles fibres. Selon un autre exemple, la pièce peut être en matériau métallique par exemple en aluminium, en titane ou en un de leurs alliages.

Avant d'initier le dépôt du revêtement, la pièce 1 est tout d'abord portée en température. Une température supérieure ou égale à 50°C, par exemple à 80°C, peut être imposée à la pièce 1.

Une fois la pièce 1 portée en température, le dépôt par poudrage à chaud est initié. Durant ce dépôt, une poudre 3 est projetée sur la pièce 1 maintenue en température. La poudre 3 est projetée par une buse 5 de projection. La température imposée à la pièce 1 durant le poudrage à chaud peut être inférieure ou égale à 120°C, et par exemple comprise entre 50°C et 120°C, par exemple entre 80°C et 120°C.

La poudre 3 projetée peut comporter un mélange du monomère du polymère à obtenir et d'un agent de réticulation. Au contact de la pièce 1 chauffée, il y a réticulation du monomère afin d'obtenir le revêtement 10 anti-érosion. A titre d'exemple, on peut utiliser un mélange d'un polyol et d'un agent de réticulation isocyanate ce qui permet d'obtenir un polymère polyuréthane dans le revêtement 10 anti-érosion. On peut en variante former un revêtement comprenant un polymère silicone en utilisant par exemple le produit « 630 series powder coating » commercialisé par la société FORREST Technical Coatings. La température de transition vitreuse du revêtement 10 anti-érosion obtenu dépend de la densité de réticulation. Il fait partie des connaissances générales de l'homme du métier de choisir les constituants du mélange à projeter et leur proportion relative de sorte à ajuster la densité de réticulation et obtenir la Tg souhaitée pour le revêtement 10.

Le polymère du revêtement 10 peut être thermodurcissable ou thermoplastique. Dans le cas d'un polymère thermodurcissable, on peut soumettre, après poudrage à chaud, la pièce revêtue à un traitement thermique supplémentaire afin de poursuivre la réticulation. Le polymère peut, en variante, être thermoplastique. Dans ce cas, on peut directement projeter sur la pièce 1 le polymère formant le revêtement 10 et non un mélange d'un monomère et de l'agent de réticulation. On peut ainsi utiliser le polymère thermoplastique « Polyurethane Protective Tape 8672 » commercialisé par la société 3M^{™}. Ce polymère présente une température de transition vitreuse de - 30°C. D'une manière générale, on veillera à avoir une température de fusion du polymère suffisante pour éviter au revêtement 10 de fondre en fonctionnement lorsque le polymère est thermoplastique. A titre illustratif, la température de fusion du polymère thermoplastique peut être supérieure ou égale à 100°C, voire à 150°C.

On peut projeter la poudre, et donc former le revêtement 10, directement au contact de la pièce CMO ou en matériau métallique. Selon une variante toutefois, la pièce traitée par poudrage à chaud peut présenter un primaire d'adhérence sur lequel le revêtement est destiné à être formé. Le primaire d'adhérence peut comporter un silane. Un exemple de primaire d'adhérence utilisable est le produit commercialisé sous la référence SP-121 par la société NuSil. Lorsque la pièce 1 est montée dans la turbomachine, elle peut être uniquement revêtue du revêtement 10 avec éventuellement le primaire d'adhérence. En particulier, la pièce 1 peut ne pas être revêtue d'une peinture anti-érosion.

Selon un exemple, la poudre 3 projetée peut en outre comporter des particules céramiques et/ou carbone, comme des particules d'alumine, de silice ou de carbure de silicium. Dans ce cas, le revêtement 10 obtenu sera chargé par des particules céramiques et/ou carbone. A titre illustratif, la teneur massique des particules céramiques et/ou carbone dans le revêtement 10 peut être comprise entre 0,1% et 30%.

Le revêtement 10 peut être déposé en une ou plusieurs couches. L'épaisseur e du revêtement 10 peut être comprise entre 100 µm et 400 µm. Selon un exemple, l'épaisseur du revêtement peut être évolutive le long de la surface de la pièce 1 afin de renforcer localement la protection. En variante, l'épaisseur e du revêtement 10 est uniforme sur toute la surface de la pièce 1 comme représenté à la figure 3.

L'expression « comprise entre ... et ... » doit se comprendre comme incluant les bornes.

## Revendications

1. Procédé de revêtement d'une pièce (1) de turbomachine d'aéronef par un revêtement (10) anti-érosion, le procédé comprenant :
- le dépôt du revêtement anti-érosion par poudrage à chaud sur une pièce de turbomachine d'aéronef en matériau composite à matrice organique ou en matériau métallique, ledit revêtement anti-érosion comprenant un polymère polyuréthane ou silicone, ledit polymère ayant une température de transition vitreuse inférieure ou égale à -30°C.

2. Procédé selon la revendication 1, dans lequel ledit polymère a une température de transition vitreuse inférieure ou égale à -55°C.

3. Procédé selon l'une quelconque des revendications 1 ou 2, dans lequel le revêtement (10) anti-érosion comprend en outre des particules céramiques et/ou carbone.

4. Procédé selon l'une quelconque des revendications 1 à 3, dans lequel le revêtement (10) anti-érosion comprend en outre un agent de coloration.

5. Procédé selon l'une quelconque des revendications 1 à 4, dans lequel le revêtement (10) anti-érosion a une épaisseur (e) comprise entre 100 µm et 400 µm.

6. Procédé selon l'une quelconque des revendications 1 à 5, dans lequel la pièce (1) est en matériau composite à matrice organique et dans lequel la pièce est maintenue à une température inférieure ou égale à 120°C durant le poudrage à chaud.

7. Procédé selon l'une quelconque des revendications 1 à 6, dans lequel la pièce (1) de turbomachine est une pièce de soufflante d'un moteur d'aéronef.

8. Procédé selon la revendication 7, dans lequel la pièce (1) est une aube de soufflante.

## Patentansprüche

1. Verfahren zur Beschichtung eines Teils (1) einer Turbomaschine für ein Luftfahrzeug durch eine Antierosions-Beschichtung (10), wobei das Verfahren umfasst:
- Ablagern der Antierosions-Beschichtung durch Heiß-Pulverbeschichten auf ein Teil einer Turbomaschine für ein Luftfahrzeug aus Verbundmaterial mit organischer Matrix oder aus Metallmaterial, wobei die Antierosions-Beschichtung ein Polyurethan- oder Silikonpolymer umfasst, wobei das Polymer eine Glasübergangstemperatur kleiner oder gleich -30 °C aufweist.

2. Verfahren nach Anspruch 1, wobei das Polymer eine Glasübergangstemperatur kleiner oder gleich -55 °C aufweist.

3. Verfahren nach einem der Ansprüche 1 oder 2, wobei die Antierosions-Beschichtung (10) ferner Keramik- und/oder Kohlenstoff-Partikel umfasst.

4. Verfahren nach einem der Ansprüche 1 bis 3, wobei die Antierosions-Beschichtung (10) ferner ein Färbemittel umfasst.

5. Verfahren nach einem der Ansprüche 1 bis 4, wobei die Antierosions-Beschichtung (10) eine Dicke (e) zwischen 100 µm und 400 µm aufweist.

6. Verfahren nach einem der Ansprüche 1 bis 5, wobei das Teil (1) aus Verbundmaterial mit organischer Matrix besteht und wobei das Teil während des Heiß-Pulverbeschichtens auf einer Temperatur kleiner oder gleich 120 °C gehalten wird.

7. Verfahren nach einem der Ansprüche 1 bis 6, wobei das Teil (1) einer Turbomaschine ein Gebläseteil eines Luftfahrzeug-Motors ist.

8. Verfahren nach Anspruch 7, wobei das Teil (1) eine Gebläseschaufel ist.

## Claims

1. A process for coating an aircraft turbomachine component (1) with an erosion-resistant coating (10), the process comprising:
- depositing the erosion-resistant coating by hot powder-coating on an aircraft turbomachine component made of an organic-matrix composite material or of a metallic material, said erosion-resistant coating comprising a polyurethane or silicone polymer, said polymer having a glass transition temperature of less than or equal to -30°C.

2. The process according to claim 1, wherein said polymer has a glass transition temperature of less than or equal to -55°C.

3. The process according to claim 1 or 2, wherein the erosion-resistant coating (10) further comprises ceramic and/or carbon particles.

4. The process according to any one of claims 1 to 3, wherein the erosion-resistant coating (10) further comprises a coloring agent.

5. The process according to any one of claims 1 to 4, wherein the erosion-resistant coating (10) has a thickness (e) comprised between 100 µm and 400 µm.

6. The process according to any one of claims 1 to 5, wherein the component (1) is made of an organic-matrix composite material and wherein the component is maintained at a temperature of less than or equal to 120°C during hot powder-coating.

7. The process according to any one of claims 1 to 6, wherein the turbomachine component (1) is a fan component of an aircraft engine.

8. The process according to claim 7, wherein the component (1) is a fan blade.
